# EUROPEAN PATENT APPLICATION

(11) **EP 4 838 707 A1**
(43) Date of publication of application: **11.11.2026**
(21) Application number: 26174958.4
(22) Date of filing: 28.04.2026
(51) Int. Cl.: H01R 4/68, H01P 1/04, H01R 24/40, H01R 103/00, H02G 15/34

(54) **COAXIAL CONNECTOR FOR THERMAL OPTIMIZATION OF ELECTRICAL CONNECTIONS IN CRYOGENIC SYSTEMS, IN PARTICULAR CRYOSTATS**

(30) Priority: 06.05.2025 IT 202500010110
(71) Applicant: Istituto Nazionale di Fisica Nucleare, 00044 Frascati (RM) (IT)
(72) Inventor: PUGLIA, Claudio, 00044 Frascati (RM) (IT); PAOLUCCI, Federico, 00044 Frascati (RM) (IT); TARTARI, Andrea, 00044 Frascati (RM) (IT)
(74) Representative: Metroconsult Srl

(57) **Abstract**

A coaxial connector (1) adapted for the thermal optimization of electrical connections in cryogenic systems, particularly in cryostats, the connector comprising:
• a hybrid outer shield, in turn comprising:
∘ a first part (1.1) of non-superconducting metal;
∘ a second part (1.2) of superconducting material, adapted to be coupled to said first part;

• a superconducting signal line (2), as a center conductor, made of superconducting material, said superconducting signal line (2) comprising an interruption at said coupling between the first part and the second part, and making electrical contact when said first and second parts are coupled;
• a dielectric section (3), placed between said outer shield (1) and said superconducting signal line (2);
• within the connector, a structural interruption (3.1) of said dielectric section (3), between said first part and said second part;
• an external interface and connection system.

## Description

### Field of the invention.

The present invention relates to the field of electrical connectors and more precisely to a coaxial connector for the thermal optimization of electrical connections in cryogenic systems, particularly in cryostats.

### State of the art.

In cryogenic systems, the increase in the number of electrical connections inside a cryostat introduces a critical problem related to the thermal budget. Each additional connection represents a heat transfer channel towards the lower temperature zones, compromising the maintenance of the cryogenic conditions necessary for the correct functioning of the system. Standard connectors are not optimized to minimize this thermal load, leading to a degradation of the overall performance of the cryostat, with negative impacts on efficiency and on the stability of the base temperature.

Currently, the management of electrical connections in cryostats is predominantly based on the use of superconducting cables to minimize thermal load and ensure optimal performance at low temperatures. However, these cables present numerous critical issues: they are extremely expensive, difficult to handle, require complex connectorization techniques, and are difficult to solder.

To overcome these problems, some known solutions include:
- Adoption of intermediate thermal anchoring systems, which improve the thermal budget but add structural complexity and require additional space inside the cryostat.
- Active cooling techniques at the connection points, which mitigate the effect of transmitted heat, but introduce further energy consumption and greater complexity in the system's integration.

The current solutions are therefore suboptimal, as they do not eliminate the need for expensive and complex-to-install superconducting cables.

Patent US5120705A describes a connector for superconducting transmission line cables designed to ensure capacitive and thermal insulation. It introduces a coaxial transmission line that uses superconducting materials for the inner and outer conductors, reducing ohmic losses. The inner conductor is hollow and carries a refrigerant, such as liquid nitrogen, to cool the superconductors, maintaining them in their superconducting state. The connector allows for mechanical, electrical, and thermal isolation between the superconducting cable and conventional non-superconducting components, such as antennas or other transmission lines. The connector uses double coupling capacitors to facilitate signal transfer while avoiding thermal leakages, ensuring that the superconductors remain at optimal temperatures. The connector also supports continuous circulation of the refrigerant, optimizing cooling efficiency, improving the transmission of high-frequency signals, making it particularly useful for applications in telecommunications and high-speed data transmission systems.

However, the described connector has some significant drawbacks, including the following: it is an entirely superconducting device that uses a cryogenic fluid circulation system, which enormously complicates the device's implementation and flexibility. It also uses capacitive decoupling, which constitutes a huge limitation on the operating frequency. The signals that can be transmitted depend on the capacitance of this coupling. In particular, this transmission line cannot be used with DC signals.

Patent US5856768A describes an interconnection structure for cryogenic coaxial cables (cryocables), designed to ensure an efficient transition of electrical signals between cryogenic and ambient temperature environments. The described structure focuses on minimizing heat transfer and signal loss, useful for applications involving high-temperature superconductors (HTS) and radio frequency (RF) electronics.

The cryocable is composed of an inner conductor surrounded by a dielectric and an ultrathin outer conductor (6-20 microns thick). This configuration is described as useful for reducing the thermal load to less than 1W, ideally below 0.1W, while maintaining a low insertion loss (<1 dB) over a wide frequency range, including UHF, microwave, and low millimeter waves (up to 40 GHz).

A special transition structure allows for the mechanical, thermal, and electrical connection between the cryocable and external circuits, in order to balance thermal load and impedance matching. The design supports various geometries (coaxial, microstrip, stripline), with the objective of ensuring an efficient signal transmission with minimal thermal impact, ideal for superconducting and cryogenic electronic systems.

However, the described interconnection structure has some significant drawbacks, including the following. The transmission line is extremely fragile and difficult to scale to temperatures below 1 K. The thickness of the outer shield is extremely thin and very prone to damage during repeated cooldowns. The operating temperature is limited to 40 K, making it unusable for lower temperature applications, such as RSFQ electronics and Quantum Computing. Furthermore, it does not provide for the implementation of cryogenic cabling with superconducting materials.

The following publications are also known.
- Puglia, C., Giazotto, F., de Simoni, G., Paghi, A., Sorba, L., & Arif, O. (2024). Josephson junction and superconducting field-effect transistor (IT102024000008983).
- Lupo, F. V., Margineda, D., Puglia, C., de Simoni, G., Macaluso, R., Giazotto, F., Mukhanov, O. A., & Arzeo, M. (2024). Digital Logic Based on Superconducting Gate-Controlled Transistors. IEEE Transactions on Applied Superconductivity, 34(3), 1-5. https://doi.org/10.1109/TASC.2024.3355327.
- Paghi, A., Trupiano, G., Puglia, C., Burgaud, H., de Simoni, G., Greco, A., & Giazotto, F. (2024). Estimation of the FR4 Microwave Dielectric Properties at Cryogenic Temperature for Quantum-Chip-Interface PCBs Design. IEEE Transactions on Instrumentation and Measurement, 73, 1-7. https://doi.org/10.1109/TIM.2024.3372217.
- Puglia, C., de Simoni, G., Ligato, N., & Giazotto, F. (2020). Vanadium gate-controlled Josephson half-wave nanorectifier. Applied Physics Letters, 116(25), 252601. https://doi.org/10.1063/5.0013512.

### Summary of the invention.

Therefore, the purpose of the present invention is to propose a coaxial connector for the thermal optimization of electrical connections in cryogenic systems, particularly in cryostats, aimed at overcoming all the aforementioned drawbacks.

The base technology of the present invention introduces a hybrid coaxial connector/line, made partially of superconducting material (e.g., Nb, NbTi, Al) and partially of conventional metal. This approach allows for effective thermal isolation directly at the connection point, reducing dependence on superconducting cables and allowing the use of more economical and easier-to-manage cables. In this way, the solution overcomes the limitations of the state of the art, improving the efficiency and scalability of connections in cryostats without compromising overall thermal performance. Furthermore, it allows for optimizing thermal dissipation at the temperature of the anchoring surface, minimizing unwanted heat conduction and ensuring effective thermal isolation of the lower temperature regions.

Furthermore, there is an interruption of the dielectric inside the connector that contributes to further limiting heat transfer, allowing for an increase in the number of connections without compromising the cryogenic performance of the system.

Thus, the main innovative element consists of a hybrid structure of the connector, in which the part made of normal metal is designed to ensure good thermalization at the anchoring surface, while the other part, made of superconducting material (Nb, NbTi, Al or similar), is designed to minimize unwanted thermal conduction towards the lower temperature regions.

Moreover, the interruption of the dielectric further reduces thermal conductivity and improves thermal isolation between the different sections. This configuration allows for optimizing the thermal budget of the cryostat, permitting an increase in the number of connections without compromising the overall thermal performance of the system. Thanks to this solution, it is possible to drastically reduce the need for superconducting cables for signal transmission in cryostats, allowing the use of more economical and easily connectable cables, without sacrificing the efficiency of cryogenic cooling. The invention can be applied in various fields of advanced research and technology, including quantum physics experiments, superconducting devices, and ultra-low cooling systems for sensitive electronic components.

The subject of the present invention is a coaxial connector for the thermal optimization of electrical connections in cryogenic systems, particularly in cryostats, as in claim 1.

Dependent claims 2 to 9 define preferred embodiments of the coaxial connector of claim 1. All claims form an integral part of the present description.

### Brief description of the figures.

Further purposes and advantages of the present invention will become clear from the following detailed description of an embodiment thereof (and its variants), and with reference to the attached drawings given for purely explanatory and non-limiting purposes, in which:
in Figures 1 and 2, a schematic embodiment of the coaxial connector, object of the present invention, is shown in a longitudinal section in a front view and respectively in an axonometric projection;
in Figure 3, a real embodiment of the coaxial connector, object of the present invention, is shown in an axonometric projection;
in Figures 4.1 and 4.2, the example of Figure 3 is shown in an enlarged view;
in Figure 5, an example of the connector's application to a cryostat is shown;
in Figure 6, an example of the connector's coupling to coaxial cables is shown;
in Figure 7, an enlarged view of the central part of the connector with screw coupling is shown;
in Figure 8, an enlarged view of the central part of the connector with snap-fit coupling is shown.

The same numbers and letters of reference in the figures identify the same elements or components.

### Detailed description of exemplary embodiments.

The invention relates to a hybrid panel-mount coaxial connector optimized for cryogenic applications, with an innovative configuration that reduces the thermal load in electrical connections without compromising radio frequency performance.

The implementation principle can be extended to any type of radio frequency connector, including SMP, 1 mm, and other standards used in cryogenic or high-precision applications, as specified below.

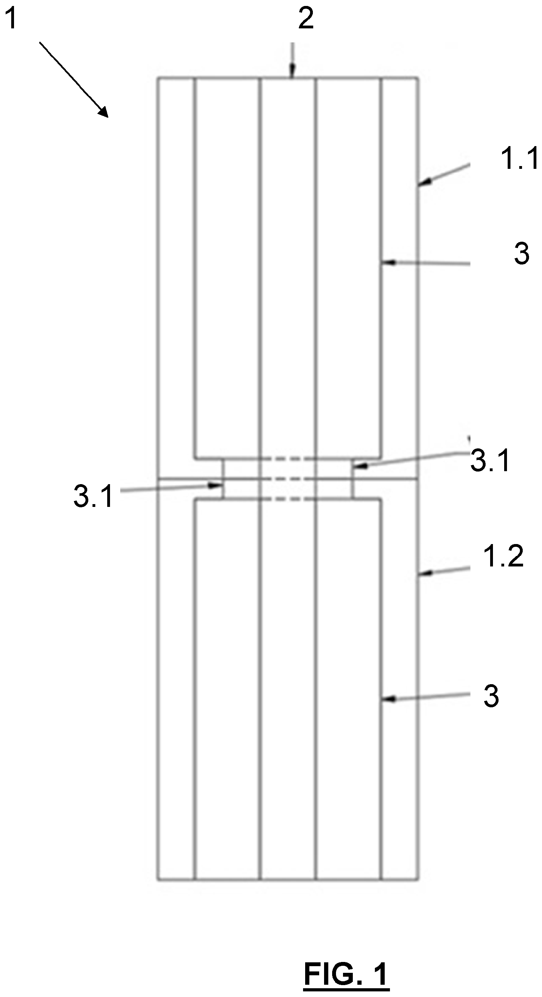

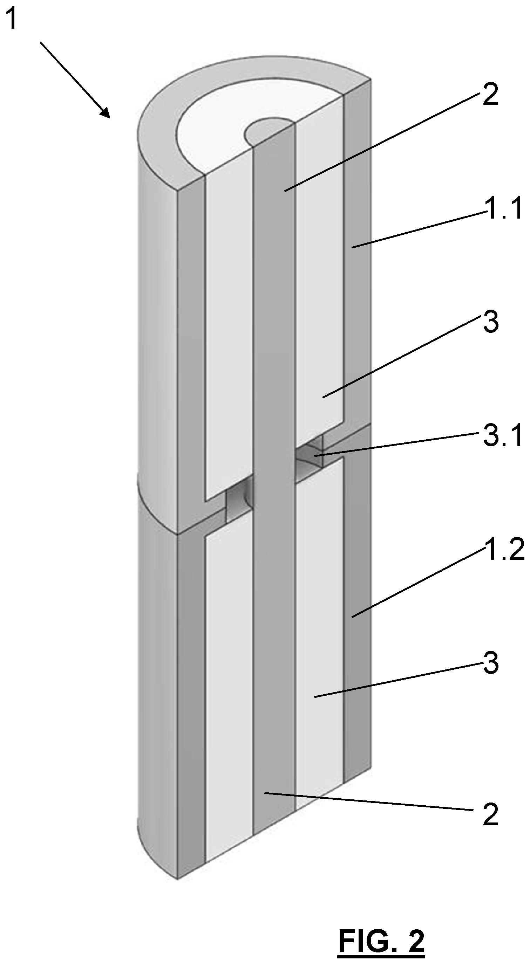

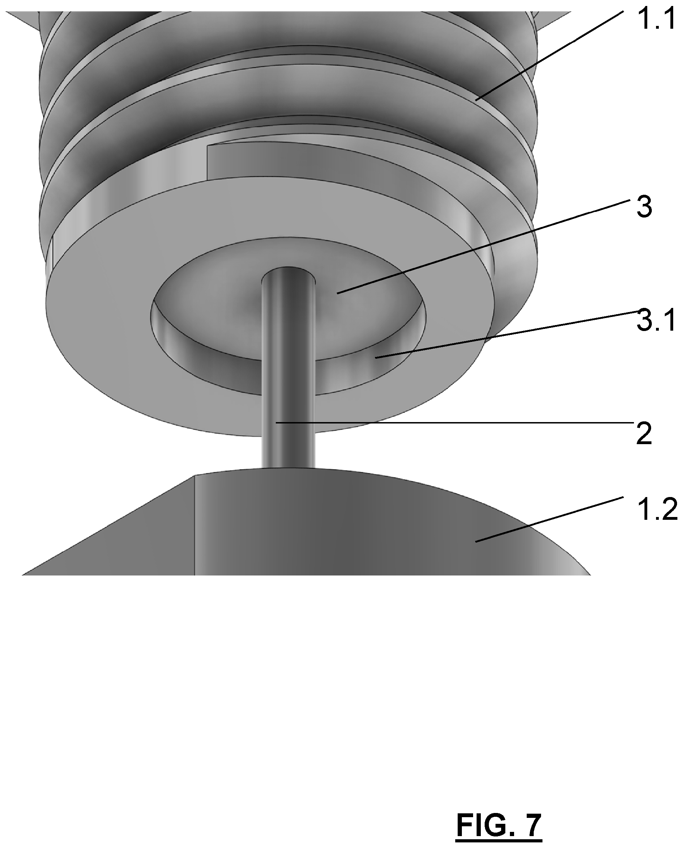

With reference to Figures 1 and 2, the connector 1 comprises the following elements, substantially cylindrical in structure, and divided into two parts adapted to be coupled in use:
- Hybrid outer shield: a part of the outer shield 1.1 is made of a normal non-superconducting metal (e.g., copper or brass), while the other part 1.2 is made of a superconducting material (Nb, NbTi, Al or similar). The part in normal non-superconducting metal 1.1 is preferably located near the anchoring surface of the cryostat, promoting adequate thermalization. The part in superconducting material 1.2 is preferably located towards the cryogenic temperature region, reducing thermal conduction. The two parts 1.1 and 1.2 preferably comprise a screw coupling, but other types of coupling are possible, as described below.
- Superconducting signal line: the center conductor 2 of the connector is made entirely of superconducting material (Nb, NbTi, Al or similar), ensuring efficient signal transmission and minimizing thermal load.
- Interrupted dielectric: the dielectric section 3 inside the connector has a structural interruption 3.1 as an insulating vacuum gap to reduce thermal conductivity. Preferably, the interruption is created by a central annular vacuum between the two parts 1.1 and 1.2 of the outer shield (see also the enlarged view in Figure 7). This arrangement further limits heat transfer along the connection line. This interruption must be dimensioned to maintain the characteristic impedance of the transmission line. Therefore, its width, which depends on the desired impedance, will be chosen so that the impedance is typically 50 Ohm or 75 Ohm. Furthermore, the length of the interruption, along the connector axis, must be less than about 10 times the wavelength for which the transmission line is to be used, e.g., 20 GHz, 1 < 1.5 mm.

The connector includes an external interface and connection system, as shown in the various figures. The connector can be adapted to all standards for coaxial connections (e.g., SMA, 1 mm, SMP, etc.) and can be coupled to conventional cables made of normal metals, thus reducing the need to use superconducting cables along the entire length of the connection.

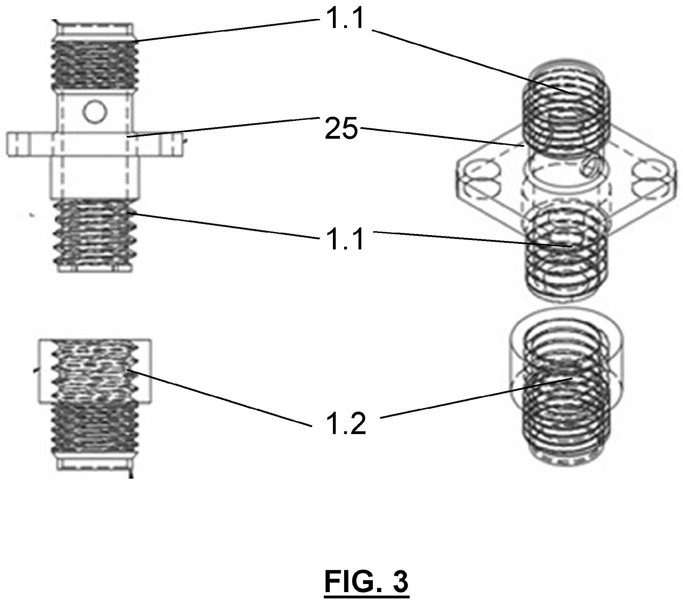

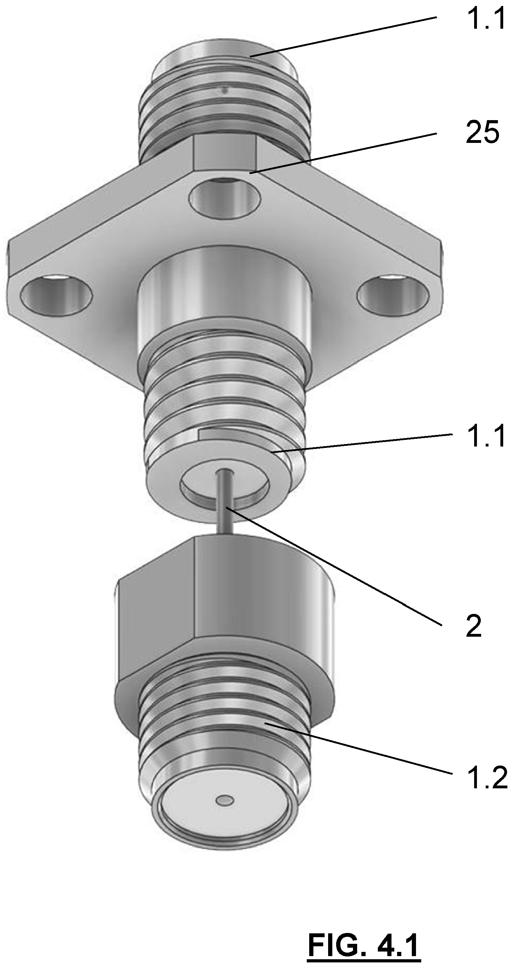

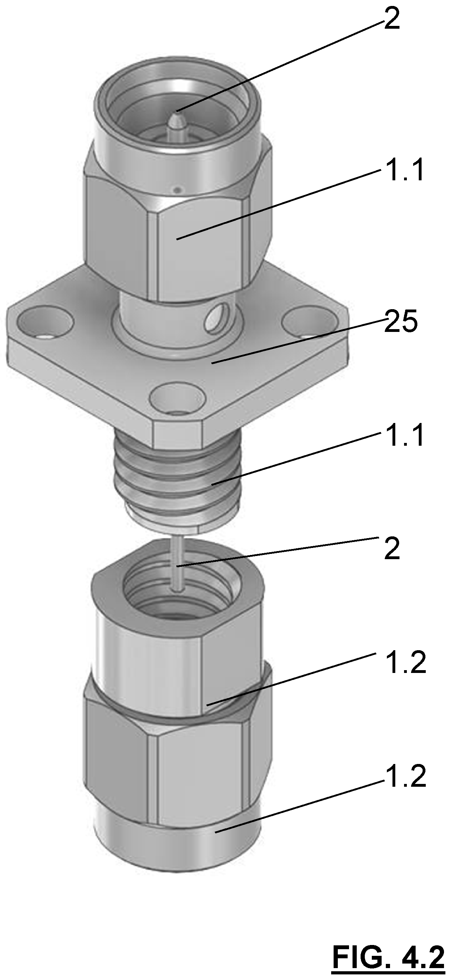

In Figure 3, and in the enlarged views of Figures 4.1 and 4.2, an exemplary embodiment of the connector of the invention is shown, where part 1.1 is made of normal metal, while part 1.2 is made of superconducting metal. This embodiment provides, as a further element of the external interface and connection system, a "panel-mount" anchor 25 (for example, via screws) shaped as a flange, and a connection between the two metals via a screw coupling. The anchor 25 is preferably applied around part 1.1.

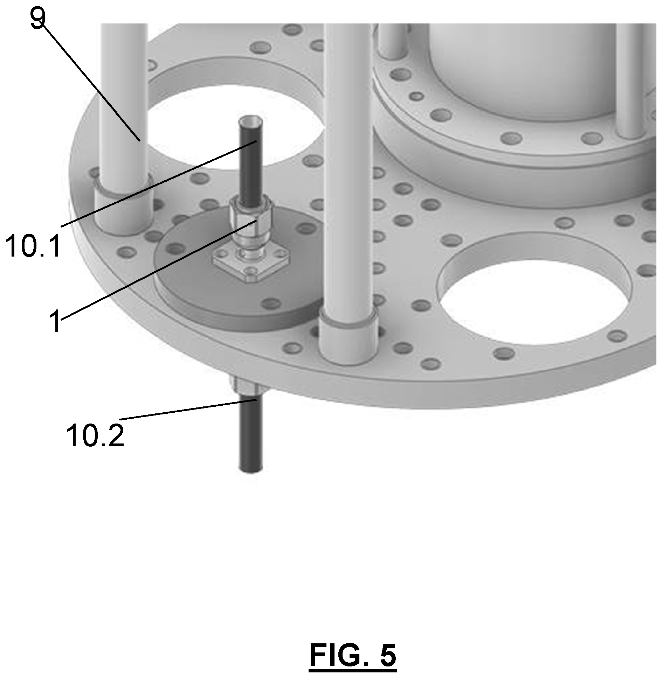

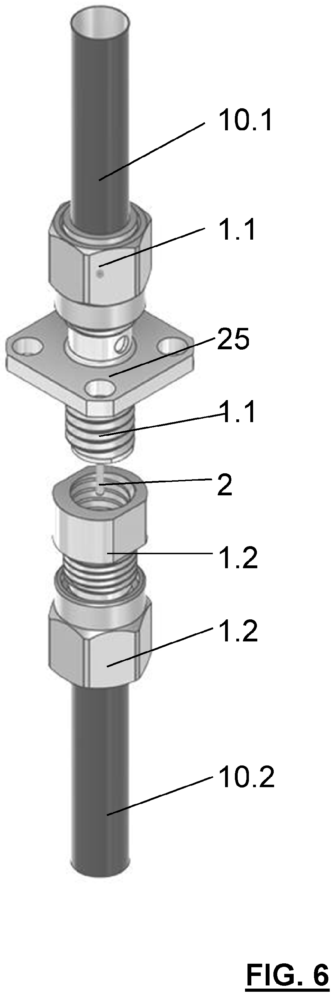

With reference to Figures 4.1 and 4.2, it is noted that the terminals of the connector can be of the "male" or "female" type. For example, in the figures, the center connector 2 can protrude from a "male" part of the connector, indifferently 1.1 or 1.2, and insert into the corresponding "female" part, indifferently 1.2 or 1.1. This can occur both in the central mutual coupling part and in the two external parts for coupling with corresponding coaxial cables 10.1 or 10.2 (Figures 5 and 6), the latter typically being of normal metal.

The two parts of the center conductor 2 preferably connect by contact inside the connector when the two parts 1.1 and 1.2 are coupled.

Figure 5 shows a possible insertion of the connector, via the "panel-mount" anchor 25, into a part of a cryostat, known per se, particularly in the plate 9 of the mixing chamber of the cryostat.

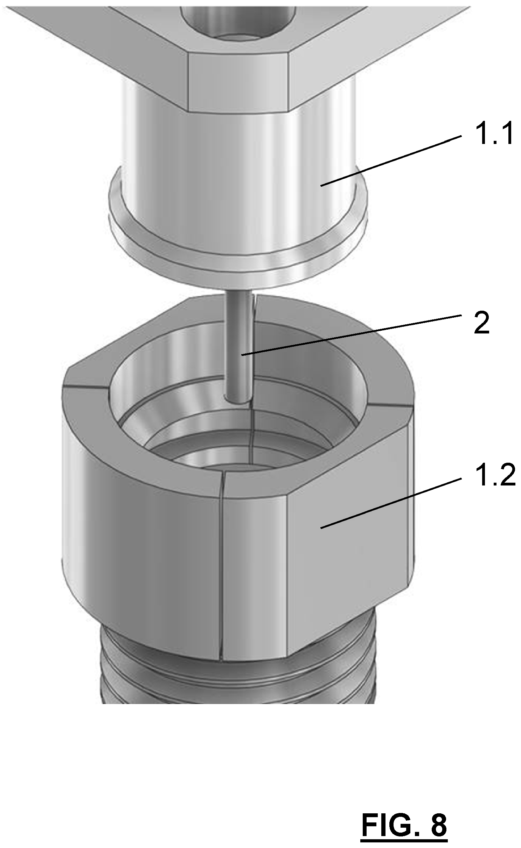

A variant of the coupling type, besides the screw type, which can be used between the two parts of the connector 1.1 and 1.2 and/or of the connector with the coaxial cables 10.1 and 10.2, is a snap-fit coupling. Figure 8 shows an example of a snap-fit coupling between the two parts 1.1 and 1.2 of the connector.

The hybrid coaxial connector of the present invention allows for improving the thermal budget in cryostats because:
- The part in normal metal dissipates heat near the anchoring surface, preventing it from being transmitted to the cryogenic regions.
- The part in superconducting material reduces thermal conduction and ensures excellent signal transmission at radio frequency.
- The interruption of the dielectric decreases the overall thermal conductivity of the connector, further contributing to thermal isolation.

This configuration allows for scaling the number of connections in cryostats without compromising thermal performance and reducing costs compared to the use of fully superconducting cables.

It should be noted that the dimensions are modifiable and adaptable to any type of application that requires a characteristic impedance different from the standard 50 Ω and 75 Ω.

The invention can be extended to other connectors for radio frequency applications, such as:
- SMA (SubMiniature version A) - Used for applications up to 18 GHz, compact and robust.
- SMP (SubMiniature version P) - Smaller version of SMA, used for high frequencies up to 40 GHz.
- SMB (SubMiniature version B) - Snap-on connector for frequencies up to 4 GHz.
- SMC (SubMiniature version C) - Similar to SMB, but with a screw lock, supports up to 10 GHz.
- BNC (Bayonet Neill-Concelman) - Bayonet connector, widely used in electronic and video instrumentation (up to 4 GHz).
- TNC (Threaded Neill-Concelman) - Threaded version of BNC, better for high frequencies up to 11 GHz.
- N-Type - Robust connector for radio frequency, supports up to 11 GHz.
- C-Type - Similar to N-Type but with a bayonet connection to facilitate rapid connection.
- UHF (Ultra High Frequency, PL-259/SO-239) - Used in CB radios and low-frequency communications.
- 2.92 mm (K-Type) - Supports up to 40 GHz, compatible with SMA and 3.5 mm.
- 3.5 mm - Supports up to 34 GHz, designed for microwave laboratories.
- 1.85 mm (V-Type) - For applications up to 67 GHz.
- 1 mm - Supports up to 110 GHz, used in very high-frequency tests.
- 2.4 mm - For frequencies up to 50 GHz, with low loss.
- 7-16 DIN - Used in telecommunications and cellular networks, optimized for high RF powers.
- MMCX (Micro-Miniature Coaxial) - Smaller version of MCX, widely used in mobile devices.
- MCX (Micro Coaxial) - Similar to SMB, but smaller and lighter.
- QMA - Quick-disconnect version of SMA, used in telecommunications.
- F-Type - Used for cable and satellite TV (up to 1 GHz).
- GPO / GPPO / G3PO - Miniaturized, used for very high-frequency connections (over 65 GHz).
- HDC (High-Density Coaxial) - Used in high-density connection applications.
- SSMA - Smaller version of SMA, with similar performance.

The hybrid structure with an outer shield and center conductor in superconducting materials can be adapted to ensure the same thermal and transmission performance. The interruption of the dielectric can be optimized based on the type of connection and the operating frequency.

This invention therefore represents a highly versatile solution for reducing the thermal load in the electrical connections of cryogenic systems, significantly improving the scalability and overall efficiency of the system.

The following table compares typical values of thermal resistance, attenuation, and cost of two known approaches for the connectorization of radio frequency lines in a cryostat, with the corresponding values obtained with the connector of the present invention.

| | **SMA standard + NbTi219** | **SMA standard + CuNi219** | **Connector of the present invention + CuNi219** |
|---|---|---|---|
| Thermal resistance (10^6 K/W)* | 6.4 | 5.7 | 11.3 |
| Attenuation @4K @5GHz (dB)* | 0.4 | 1.5 | 1.3 |
| Cost | high | low | low |

It is noted that:
- Standard SMA Connector + NbTi219: an expensive solution as it uses superconducting cables in NbTi. It guarantees excellent thermal isolation and excellent electrical contact, but at the expense of a high cost.
- Standard SMA Connector + CuNi219: CuNi219 cables are used, an economical solution that, however, worsens thermal isolation.
- Connector of the present invention significantly improves thermal resistance without increasing costs. The higher the thermal resistance, the better the solution.

Possible embodiment variants to the non-limiting example described are possible, without departing from the scope of protection of the present invention, including all equivalent embodiments for a person skilled in the art.

The elements and characteristics illustrated in the various preferred embodiments can be combined with each other without departing from the scope of protection of the present invention.

From the description provided above, a person skilled in the art is able to realize the object of the invention without introducing further construction details.

## Claims

1. A coaxial connector (1) adapted for the thermal optimization of electrical connections in cryogenic systems, particularly in cryostats, the connector comprising:
• a hybrid outer shield, in turn comprising:
∘ a first part (1.1) of non-superconducting metal;
∘ a second part (1.2) of superconducting material, adapted to be coupled to said first part;
• a superconducting signal line (2), as a center conductor, made of superconducting material, said superconducting signal line (2) comprising an interruption at said coupling between the first part and the second part, and making electrical contact when said first and second parts are coupled;
• a dielectric section (3), placed between said outer shield (1) and said superconducting signal line (2);
• within the connector, a structural interruption (3.1) of said dielectric section (3), between said first part and said second part;
• an external interface and connection system.

2. The coaxial connector according to claim 1, wherein said structural interruption (3.1) is realized by creating a central annular vacuum in said dielectric section (3).

3. The coaxial connector according to claim 1 or 2, wherein said coupling between said first part (1.1) and said second part (1.2) is a screw-type or snap-fit coupling.

4. The coaxial connector according to any one of the preceding claims, wherein said external interface and connection system comprises a screw-type or snap-fit coupling with external coaxial cables (10.1, 10.2).

5. The coaxial connector according to any one of the preceding claims, wherein said external interface and connection system comprises an anchor shaped as a flange (25) for connection to a panel.

6. The coaxial connector according to any one of the preceding claims, wherein said first part (1.1) and said second part (1.2) are shaped as male and female in said coupling.

7. The coaxial connector according to any one of the preceding claims, wherein, in the case of insertion of said coaxial connector (1) into a cryogenic system, said first part (1.1) is adapted to be placed in the proximity of the anchoring surface of a cryostat, and said second part (1.2) is adapted to be placed towards a cryogenic temperature region.

8. The coaxial connector according to any one of the preceding claims, wherein said structural interruption (3.1) has a length along the connector axis of less than about 10 times a wavelength of a signal in said connector.

9. The coaxial connector according to any one of the preceding claims, wherein said structural interruption (3.1) has a width that depends on the impedance to be obtained.
